# EUROPEAN PATENT SPECIFICATION

(11) **EP 1 366 655 B1**
(45) Date of publication and mention of the grant of the patent: **21.12.2005**
(21) Application number: 03101397.2
(22) Date of filing: 19.05.2003
(51) Int. Cl.: A01G 9/14, A01G 9/24

(54) **SYSTEM PROVIDED WITH CULTIVATION TABLES**
System mit Pflanzenzuchttischen
Système avec des tables de culture de plantes

(30) Priority: 30.05.2002 NL 1020723
(43) Date of publication of application: 03.12.2003
(73) Proprietor: Van de Lande en Zonen B.V., 4941 VK Raamsdonksveer (NL)
(72) Inventor: Van de Lande, Theodorus, 4941 VK, RAAMSDONKSVEER (NL)
(74) Representative: Hooiveld, Arjen Jan Winfried

(56) References cited:
- EP-A- 0 244 935
- NL-A- 9 300 559
- US-A- 5 355 618
- US-A- 5 415 155

## Description

The invention relates to a system comprising cultivating tables as well as an irrigation device for supplying a liquid medium to cultivation products being cultivated on the cultivating tables, wherein each cultivating table comprises an inlet and an outlet for the medium, said inlet and/or outlet comprising coupling means for detachably coupling adjacent cultivating tables, wherein said coupling means are at least substantially made up of two mating coupling elements (A, B), one (A) being connected to the outlet of a cultivating table and the other (B) being connected to the inlet of an adjacent cultivating table. The liquid medium is in particular water, which may or may not contain nutrients for the cultivation products, whilst the cultivation products themselves are usually potted plants or the like. It is noted that the invention is not limited to a specific irrigation method. Thus, the irrigation device may operate according to a so-called ebb-and-flow system, in which the cultivating tables are cyclically inundated to a certain level during a flow period and allowed to run completely dry during an ebb period so as to prevent in particular root rot and fungus occurring at the bottom side of the cultivation products. According to another irrigation method, the water is applied to the cultivation products in drops above the cultivating tables.

A system as described in the preamble of claim 1 is known from Dutch patent publication no. 93.00559, on the understanding that said known system comprises cultivation trays instead of cultivation tables. A drawback of said known system is that a leakage tank is provided for receiving leaking water in case neighbouring cultivation tables are uncoupled in vertical direction.

A system operating according to the aforesaid ebb-and-flow system, comprising ten to twenty cultivating tables, for example, is known from US patent No 5,355,618 (Pedersen). In this known system, water is supplied as the irrigation medium in a central inlet pipe under the cultivating tables, in which a magnetically actuated main valve can open the central supply of water during a flow period and shut it off during an ebb period. A drawback of the system that is known from the aforesaid US patent publication is the following. Nowadays it is usual to position cultivating tables side-by-side (i.e. without aisles) in a greenhouse in order to optimally utilise the space in said greenhouse. The cultivating tables roll on rails installed in the greenhouse in that case. Thus it is possible to move a cultivating table (via an automated system) to an adjoining space, where a manual operation (for example pruning) of the cultivation products being cultivated on said cultivating table is to be carried out. Staff present in said adjoining space are thus not exposed to high temperatures and/or polluted air in the greenhouse. The known system is not suitable for this kind of use, since it would only be possible, using said system, to detach the cultivating tables alternately in a laborious manner and move them to the adjoining space.

The object of the invention is to obviate these drawbacks of the prior art, and in order to accomplish that objective a system of the kind referred to in the introduction is according to the invention characterized in that the coupling elements each comprise a valve which closes on its own accord in the uncoupled position of the coupling elements. Since the valve automatically closes as soon as the coupling elements become detached from each other, i.e. upon detachment of the respective cultivating tables, leakage of the liquid medium is prevented.

In another preferred embodiment of a system according to the invention, the valve comprises a valve member which is movable between a first position, in which the coupling elements are coupled, and a second position, in which the coupling elements are uncoupled, said valve member opening the valve in said first position and closing the valve in said second position. In particular, the valve member can move from said first position to said second position under the influence of the action of a spring. The valve is a spring-loaded non-return valve in that case, therefore, which provides a seal when the coupling elements are being uncoupled.

In another preferred embodiment of a system according to the invention, the valve members of mating coupling elements push against each other in said first position.

The invention also relates to a cultivating table to be used in a system according to the invention, wherein said cultivation table comprises an inlet and an outlet for a liquid medium, said inlet and said outlet comprising coupling means for detachably coupling adjacent cultivating tables, wherein said coupling means are at least substantially made up of two mating coupling elements (A, B), one (A) being connected to the outlet of said cultivating table and the other (B) being connected to the inlet of a cultivating table to be connected adjacent to said cultivating table, and wherein the coupling elements (A, B) each comprise a valve which closes on its own accord in the uncoupled position of the coupling elements (A, B).

The invention will be explained in more detail hereinafter with reference to Figures illustrated in a drawing, in which:

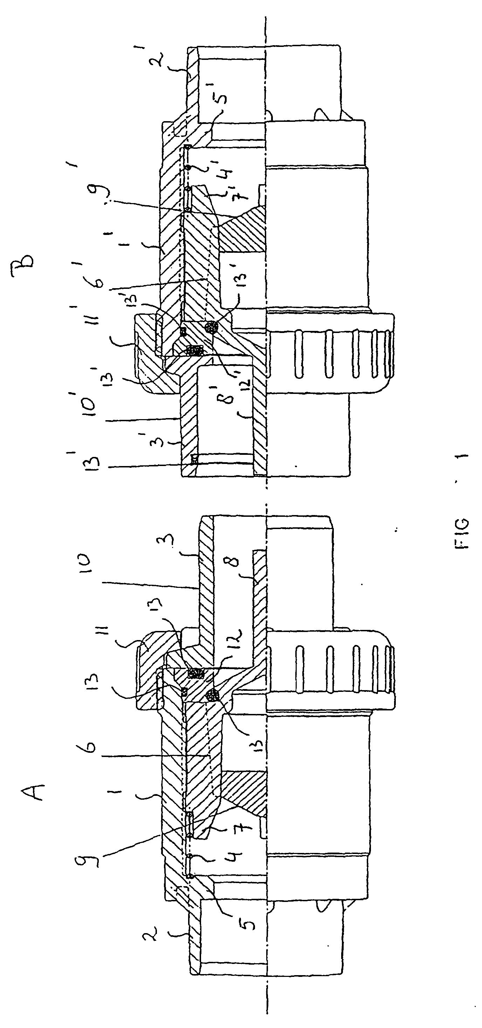

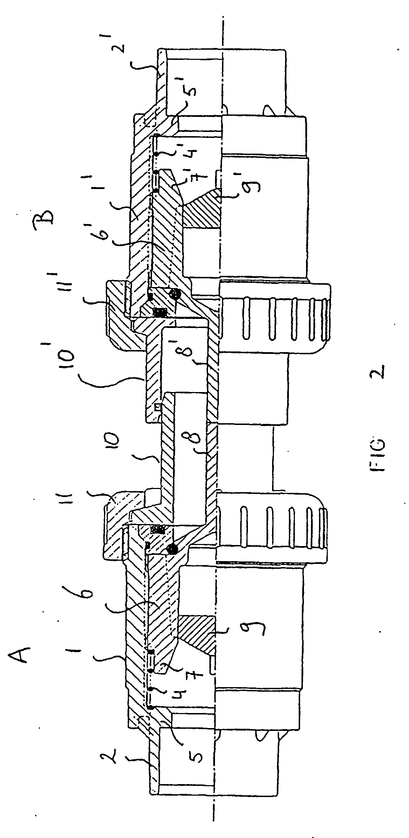

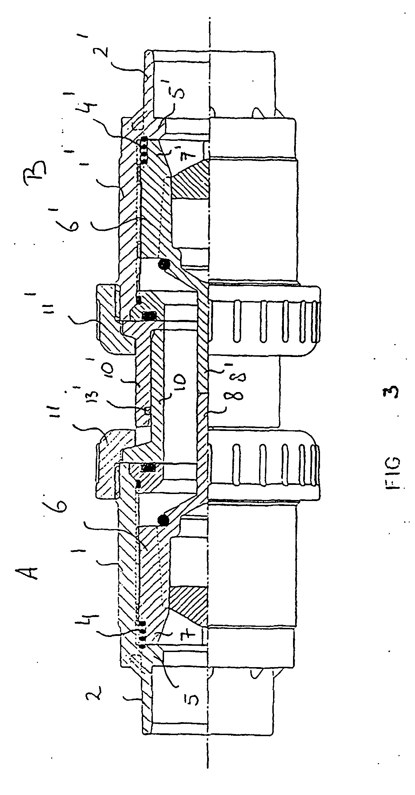

- Figures 1 - 3 are views, partially in longitudinal section, of two coupling elements, showing the coupling elements in uncoupled position (Figure 1), in partially coupled position (Figure 2) and in coupled position (Figure 3).

The Figures show two mating coupling elements A and B, which are each built up as follows. The coupling element A comprises a substantially tubular housing 1, which can be mounted on a water outlet of a cultivating table (not shown) at its one end 2, for example by means of a screwed or a glued joint, and which can be moved into an end 3' of a (likewise substantially tubular) housing 1' of the coupling element B at its other end 3 (Figures 2 and 3). An end 2' of the housing 1' disposed opposite the end 3' can be mounted on a water inlet of an adjacent cultivating table (likewise not shown), also by means of a screwed or a glued joint, for example. The two housings 1,1' comprise a steel coil spring 4,4', which is supported on an internal, radially inwardly extending edge 5,5' of the housing 1,1'. The coil spring 4,4' allows movement under spring load of a valve member 6,6' disposed in the housing 1,1' between a first position (in which the coupling elements A and B are coupled; see Figures 2 and 3) and a second position (in which the coupling elements A and B are uncoupled; see Figure 1). In the first position (Figure 3) the valve member 6,6' opens a valve thus formed, and in the second position (Figure 1) said valve member automatically closes the valve. Leakage of water during the uncoupling of adjacent cultivating tables, for example when one of said cultivating tables is moved off over rails installed in a greenhouse, for the purpose of manually pruning - in a separate space - cultivation products being cultivated on said cultivating table, is impossible, therefore. As the Figures show, the valve member 6,6' is circumferentially provided with legs 7,7', which engage the coil spring 4,4', as well as with pins 8,8'. Said pins 8,8' push against each other in the aforesaid first position (in which the coupling elements A and B are coupled; see Figures 2 and 3). A cap 9,9' is present between the legs 7,7' of each valve member 6,6' for reducing the flow resistance of the water.

The end 3,3' of the housing 1,1' is made up of a separate, hat-shaped element 10,10', which is connected to the housing 1,1' by means of a gland nut 11,11' with the interposition of a ring-shaped element 12,12'. The end 2,2' is integrally connected to the housing 1,1'. In order to prevent leakage of water during operation, rubber sealing rings 13,13' are provided. In the illustrated embodiment, the housing 1,1', the valve member 6,6', and the elements 10,10'; 11,11'; 12,12' are made of plastic material.

The invention is not limited to the embodiment as discussed above, but it also extends to other variants that fall within the scope of the appended claims.

## Claims

1. A system comprising cultivating tables as well as an irrigation device for supplying a liquid medium to cultivation products being cultivated on the cultivating tables, wherein each cultivating table comprises an inlet and an outlet for the medium, said inlet and said outlet comprising coupling means for detachably coupling adjacent cultivating tables, wherein said coupling means are at least substantially made up of two mating coupling elements (A, B), one (A) being connected to the outlet of a cultivating table and the other (B) being connected to the inlet of an adjacent cultivating table **characterized in that** the coupling elements (A, B) each comprise a valve which closes on its own accord in the uncoupled position of the coupling elements (A, B).

2. A system according to claim 1, wherein the valve comprises a valve member (6,6')which is movable between a first position, in which the coupling elements (A, B) are coupled, and a second position, in which the coupling elements are uncoupled (A, B), said valve member (6, 6')opening the valve in said first position and closing the valve in said second position.

3. A system according to claim 2, wherein the valve member (6, 6') can move from said first position to said second position under the influence of the action of a spring (4, 4').

4. A system according to claim 3 or 4, wherein the valve members (6, 6') of mating coupling elements (A, B) push against each other in said first position.

5. A cultivating table to be used in a system according to any of the preceding claims 1 through 4, wherein said cultivation table comprises an inlet and an outlet for a liquid medium, said inlet and said outlet comprising coupling means for detachably coupling adjacent cultivating tables, wherein said coupling means are at least substantially made up of two mating coupling elements (A, B), one (A) being connected to the outlet of said cultivating table and the other (B) being connected to the inlet of a cultivating table to be connected adjacent to said cultivating table, and wherein the coupling elements (A, B) each comprise a valve which closes on its own accord in the uncoupled position of the coupling elements (A, B).

## Patentansprüche

1. System, das Pflanzenzuchttische umfaßt sowie eine Bewässerungsvorrichtung zur Zuführung eines flüssigen Mediums zu Zuchtprodukten, die auf den Pflanzenzuchttischen gezüchtet werden, wobei jeder Pflanzenzuchttisch einen Einlaß und einen Auslaß für das Medium umfaßt, wobei besagter Einlaß und besagter Auslaß Kopplungsmittel zur lösbaren Kopplung benachbarter Pflanzenzuchttische umfassen, wobei besagte Kopplungsmittel wenigstens im wesentlichen aus zwei zusammenpassenden Kopplungselementen (A, B) bestehen, wobei eines (A) mit dem Auslaß eines Pflanzenzuchttisches verbunden ist und das andere (B) mit dem Einlaß eines benachbarten Pflanzenzuchttisches verbunden ist, **dadurch gekennzeichnet, daß** die Kopplungselemente (A, B) jeweils ein Ventil umfassen, das sich in der nicht-gekoppelten Stellung der Kopplungselemente (A, B) von selbst schließt.

2. System nach Anspruch 1, **dadurch gekennzeichnet, daß** das Ventil ein Ventilteil (6, 6') umfaßt, das zwischen einer ersten Stellung, in der die Kopplungselemente (A, B) gekoppelt sind, und einer zweiten Stellung, in der die Kopplungselemente (A, B) nicht-gekoppelt sind, bewegbar ist, wobei besagtes Ventilteil (6, 6') das Ventil in besagter ersten Stellung öffnet und das Ventil in besagter zweiten Stellung schließt.

3. System nach Anspruch 2, **dadurch gekennzeichnet, daß** das Ventilteil (6, 6') sich aus besagter ersten Stellung in besagte zweite Stellung unter dem Einfluß der Wirkung einer Feder (4, 4') bewegen kann.

4. System nach Anspruch 3 oder 4, **dadurch gekennzeichnet, daß** die Ventilteile (6, 6') von zusammenpassenden Kopplungselementen (A, B) in besagter ersten Stellung gegeneinander drücken.

5. Pflanzenzuchttisch, der in einem System nach einem der vorangehenden Ansprüche 1 bis 4 verwendet werden soll, wobei besagter Pflanzenzuchttisch einen Einlaß und einen Auslaß für ein flüssiges Medium umfaßt, wobei besagter Einlaß und besagter Auslaß Kopplungsmittel zur lösbaren Kopplung benachbarter Pflanzenzuchttische umfassen, wobei besagte Kopplungsmittel wenigstens im wesentlichen aus zwei zusammenpassenden Kopplungselementen (A, B) bestehen, wobei eines (A) mit dem Auslaß besagten Pflanzenzuchttisches verbunden ist und das andere (B) mit dem Einlaß eines zu verbindenden Pflanzenzuchttisches benachbart zu besagtem Pflanzenzuchttisch verbunden ist, und wobei die Kopplungselemente (A, B) jeweils ein Ventil umfassen, das sich in der nicht-gekoppelten Stellung der Kopplungselemente (A, B) von selbst schließt.

## Revendications

1. Système comprenant des tables de culture ainsi qu'un dispositif d'irrigation destiné à transmettre un milieu liquide à des produits de culture qui sont cultivés sur les tables de culture, dans lequel chaque table de culture comporte une entrée et une sortie destinées au milieu, l'entrée et la sortie comprenant des dispositifs de raccordement destinés à raccorder de façon amovible des tables de culture adjacentes, dans lequel les dispositifs de raccordement sont au moins pratiquement constitués de deux éléments complémentaires de raccordement (A, B) dont l'un (A) est raccordé à la sortie d'une table de culture et l'autre (B) est raccordé à l'entrée d'une table de culture adjacente, **caractérisé en ce que** les éléments de raccordement (A, B) comportent chacun une soupape qui se ferme d'elle-même pour la position séparée des éléments de raccordement (A, B).

2. Système selon la revendication 1, dans lequel la soupape comprend un organe obturateur (6, 6') qui est mobile entre une première position dans laquelle les éléments de raccordement (A, B) sont raccordés et une seconde position dans laquelle les éléments de raccordement sont séparés (A, B), l'organe obturateur (6, 6') ouvrant la soupape dans la première position et fermant la soupape dans la seconde position.

3. Système selon la revendication 2, dans lequel l'organe obturateur (6, 6') peut se déplacer de la première position vers la seconde position sous l'influence de l'action d'un ressort (4, 4').

4. Système selon la revendication 3 ou 4, dans lequel les organes obturateurs (6, 6') des éléments complémentaires de raccordement (A, B) exercent une poussée l'un contre l'autre dans la première position.

5. Table de culture destinée à être utilisée dans un système selon l'une quelconque des revendications précédentes 1 à 4, dans laquelle la table de culture comprend une entrée et une sortie d'un milieu liquide, l'entrée et la sortie comprenant des dispositifs de raccordement destinés à raccorder de façon amovible des tables de culture adjacentes, et telle que les dispositifs de raccordement sont au moins pratiquement constitués de deux éléments complémentaires de raccordement (A, B) dont l'un (A) est raccordé à la sortie de la table de culture et l'autre (B) est raccordé à l'entrée d'une table de culture destinée à être raccordée en position adjacente à ladite table de culture, et dans laquelle les éléments de raccordement (A, B) comprennent chacun une soupape qui se ferme d'elle-même en position séparée des éléments de raccordement (A, B).
